# EUROPEAN PATENT APPLICATION

(11) **EP 4 166 396 A1**
(43) Date of publication of application: **19.04.2023**
(21) Application number: 21821368.4
(22) Date of filing: 09.06.2021
(51) Int. Cl.: B60R 21/13

(54) **AUTOMATIC INFLATABLE CRUSH PROTECTION DEVICE FOR ALL-TERRAIN VEHICLES, QUAD BIKES AND QUADS**

(30) Priority: 10.06.2020 ES 202030568
(71) Applicant: Air-Rops NA 2012, S.L., 31007 Pamplona (ES)
(72) Inventor: PÉREZ DE LARRAYA PÉREZ DE OBANOS, Francisco Javier, 31192 Mutilva (ES); LUCEA ALONSO, Asier, 31008 Pamplona (ES); BALLESTEROS EGÜES, Tomás, 31013 Berriozar (ES)
(86) International application number: PCT/ES2021/070424
(87) International publication number: WO 2021/250301

(57) **Abstract**

The aim of the invention is to protect the driver of an ATV from being crushed by the weight of the vehicle (2) in the event of a rollover, the device (5) consisting of one or more deployable bags (3), which are actuated by gas generators (4) and are attached to the chassis of the vehicle (2), all arranged in a sealed housing (9), and also including at least one electronic control unit (8) equipped with inertial sensors and the logic required in order to calculate the tilt angles of the vehicle and automatically activate the gas generator(s) (4) once a predetermined tilt value is exceeded.

## Description

### TECHNICAL FIELD

This invention refers to a roll over protection device for quads, ATVs, and quad bikes, (hereinafter ATV), and more specifically to an inflatable bag that can be automatically deployed, without the intervention of the driver, in the event of a roll over by any vehicle, thus protecting the driver against a possible impact and crushing by the weight of the ATV itself.

The purpose of the invention is to obtain a cushion or a bag, in the case of a roll over, to effectively protect the driver against crushing, to cushion the impacts produced by the weight of the vehicle and to provide a safety space between the vehicle and the ground allowing the user to get rid of the dump vehicle.

### BACKGROUND OF THE INVENTION

A roll over is an accident frequently suffered by ATV drivers that occasionally ends up causing deaths. This event occurs frequently on inclined grounds, slopes, ditches, etc. Related to that, some devices have been developed to mitigate the consequences of this type of accidents and to ensure the driver is protected when the vehicle overturns.

In this sense, US20100060023A1 Patent can be cited as an example of device, consisting of a bar-mode structure with a wheel to prevent ATV's rear overturning.

In this Invention Patent, the structure is intended to be mounted in accordance with the anchorage point, which means that it is not fully protected in case of both lateral and/or frontal overturning, not offering an automatic operation that ensures its operation, regardless of the driver's will.

Patent US20090267335A1 can also be mentioned, which describes a restraint and back-up system based tubular protection structure that pursues the user's protection in case of overturning, by absorbing the structure the overturning energy and retaining the user tied to the structure.

In-this case, the protection structure is even more complex than in the previous case, solving the problem of lateral overturning. This patent mentions, as well, the possibility of the structure being drop-down and operated automatically regardless of the user's will.

At the same time, a fork shaped roll over protection structure is known. This structure is anchored to the ATV shooting hitch and to the rear grill. Unlike the structures previously presented, this structure partially limits overturns due to its limited height.

This system is not considered a roll over protection structure as it does not provide a wide safety space, nor does it provide for the installation of restraint systems. It is only considered to be a crushing protection system.

It must be highlighted that there is a possibility of damaging the user by scope in case of overturning. For this reason, it has been decided to incorporate a polyurethane shell in this structure. The negative impact of this structure on the center of gravity is also highlighted, worsening the stability of the ATV.

Apart from all the above, a structure placed on the ATV rear grill, formed by a series of articulated and tensioned sections by means of a tensor cable is also known.

As in the previous solution, this structure does not limit the rollover of the vehicle but provides crush protection if the ATV is positioned on top of the rider.

This protection is provided thanks to the solution's flexibility and a minimum safety clearance created between the ATV frame itself and the ATV's handlebars. Nevertheless, there are some disadvantages like the large surface area of the protection system that can get caught on branches and places of reduced height, as well as the elevation of the center of gravity, that reduces the stability of the ATV.

In the end, ATVs are vehicles that can easily roll over but, unlike other vehicles with similar usage, and due to their active driving characteristics, they do not have seat belts or ROPS-type roll over protection structures. For this reason, protection systems have been used which, although they do not prevent roll over like a ROPS, they do offer a certain degree of protection against crushing due to roll over, but to date no inflatable systems have been developed for ATVs to prevent the weight of the vehicle from falling on the driver, which is the objective of this application.

### INVENTION'S EXPLANATION

The automatic and inflatable device recommended has been conceived to solve the above-mentioned problem by means of a simple and effective solution, since this inflatable protection device is based on the principle of a watertight bag folded inside a housing that is inflated by the action of a gas generator. This gas expands inside the bag, increasing its volume. The bag is made of a watertight material that maintains the pressure of the gas inside. The device is anchored to the vehicle's chassis and remains anchored to it after deployment, thus preventing it from being detached due to stresses applied to it.

The gas generator is activated by a system of commands associated with an electronic control unit equipped with inertial sensors and the necessary logic to calculate the inclination angles. The gas generator acts on the bag, which is automatically deployed when the vehicle reaches a certain inclination that will result in an irremediable rollover of the vehicle. The bag unfolds by increasing its width, depth, and height, providing a safety space between the ground and the vehicle, avoiding the potential entrapment of the driver as well as the direct impact of the vehicle itself falling on him and offering him the possibility of escaping from underneath it when trapped by it.

There are several forms of application on ATV's, but depending on the weight and size of the ATV, a single device, preferibly placed behind the driver, two devices, one placed in front of the driver and the other behind his seat, or even more devices may be installed, so that all devices will be activated simultaneously or in different phases and may be activated automatically by a single electronic control unit, or by independent units.

Therefore, it is an inflatable watertight bag driven by a gas generator operated by an electronic control unit, a bag that unfolds automatically with simultaneous variations of its geometry in 3 dimensions, producing on the one hand the elevation of the bag itself by increasing the height in the vertical axis, the enlargement of its width in the transverse axis and its bottom in the longitudinal axis.

In-folded position, i.e., at rest or inoperative, the device will be housed in an enclosure that protects it from external and environmental elements. Automatic deployment will only take place in the event of an irremediable rollover, providing passive safety independent of the driver's will, being highly effective in the event of a rollover.

The transition from the folded position to the unfolded position of the inflatable bag is fully automatic and does not depend on the driver's will, but will be controlled by the electronic control unit mentioned above, the maneuver being performed by means of inertial sensors and a safety activation logic, ensuring that the transition from the resting state to the operational state will be made whenever an irreversible rollover occurs, avoiding undesired deployments during normal vehicle operation, or in specific vehicle situations, such as possible tilting due to repairs, loads, etc.

The signal processing by the electronic control unit consists of the inertial sensing of the vehicle by means of accelerometers, gyroscopes or both, whose data are processed by a fusion and estimation algorithm and by a logic that processes the activation algorithms resulting in a series of variables that must meet predetermined thresholds in order to trigger the activation of the gas generator and the deployment of the bag, so that neither the driver nor any other user can be affected.

The electronic control unit may be placed anywhere in the vehicle or even inside the housing of the device itself. By means of the actuation of the electronic control unit, after meeting the requirements established in the activation algorithm (command), the corresponding (one or more) gas generation elements will be activated for the deployment of the bag or bags, such means of gas generation may consist of, for example, one or more pressurized gas container ampoules, or one or more gas generation elements by chemical combustion, similar to those used in airbags. Such gas generating means can be activated by an electronic or mechanical impulse, immediately and suddenly releasing the said gas to carry out the unfolding of the bag, with the particularity that such gas generator(s) will be located inside the housing, even inside the textile bag.

It should also be noted that the bag will be equipped with locking devices to immobilize the possible displacement of the bag in both folded and unfolded situations, consisting of belts or straps attached to the bag, to the housing and therefore to the vehicle chassis.

These suspenders are initially located inside the corresponding housing of the device at rest, or attached to the bag, the housing and the chassis in deployed position, through a fastening element that prevents the deployed bag from moving in any of the vertical, longitudinal or transverse axes.

### BRIEF DESCRIPTION OF THE DRAWINGS

To complement the description to be made below and in order to help a better understanding of the characteristics of the invention, in accordance with a preferred example of practical realization thereof, attached a set of figures is shown as an integral part of this description in which the following has been represented for illustrative and non-limiting purposes
Figure 1.- Shows a practical representation of a user driving an ATV vehicle, in a normal driving situation and with a crush protection device in the folded position.
Figure 2.- Shows a practical representation of a user driving an ATV vehicle, in an irreversible rollover situation and with a crush protection device in the deployed position.
Figure 3.- Shows a practical representation of a user operating an ATV vehicle, in a 180° rollover situation and with a crush protection device in deployed position, shown in front view in the image on the left and in side view in the image on the right. It can be seen how the crush protection device avoids the potential impact of the ATV on the rider and the safety space for the rider to either roll the ATV to the side or escape.
Figure 4.- Shows a right side view of an ATV vehicle at the top and a left side view at the bottom, with two crush protection devices placed respectively at the front and rear of the vehicle.
Figure 5.- Shows a right side view of an ATV vehicle in a rollover situation with two crush protection devices, in their deployed position, positioned at the front and rear of the vehicle and the safety clearance increased relative to a single crush protection device.
Figure 6.- Shows a detail in section of the device object of the invention, arranged in initial or rest situation. The section shows the gas generator device, the folded bag, the fastening suspenders, the device housing, the electronic control unit and the element for fastening to the vehicle chassis.
Figure 7.- Shows a detail in section of the device object of the invention, arranged in final or deployed situation. The section shows the gas generator device, the deployed bag, the fastening straps, the device housing, and the element for fastening to the vehicle chassis.

### PREFERRED REALIZATION OF THE INVENTION

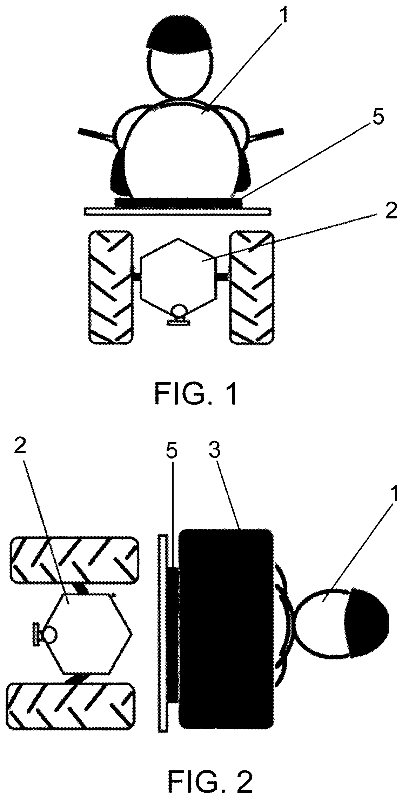

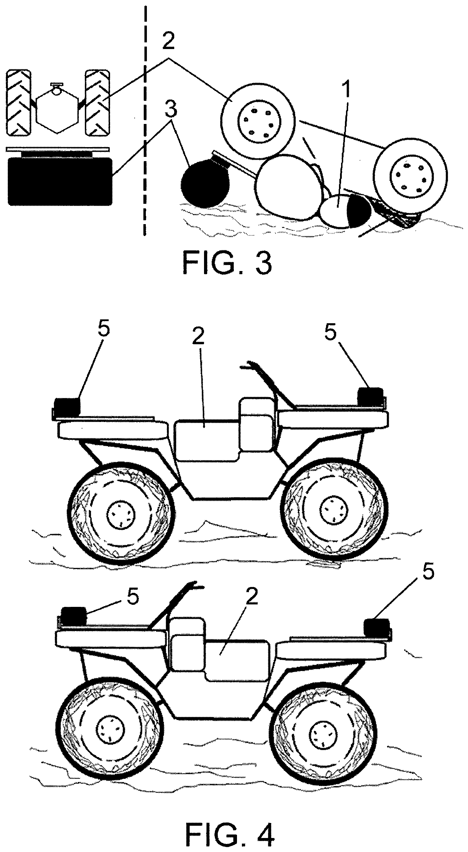

As can be seen in the figures referred to, and in relation specifically to figures 1, 2 and 4, the device (5) of the invention is intended to be implanted to an ATV type vehicle (2), in order to protect the driver (1) thereof in case of rollover, being seen in figure 4 two equal devices (5), applied on the front and on the rear part of the ATV vehicle (2), while figure 2 shows the ATV (2) in a rollover situation, where the device (5) has been deployed.

Well, such device (5) in each case has an inflatable bag configuration fixed to resistant elements of the vehicle chassis (2). The particularity of this device is the arrangement, volume and characteristics of the inflatable bag as well as its application since, unlike any other inflatable device, it prevents the crushing of the driver in the event of a rollover.

The invention has an electronic control unit (8) equipped with inertial sensors and logic that, upon a certain inclination of the vehicle during the overturning of the same and through an activation command or algorithm, activates the gas generators (4) by means of which the deployment of the inflatable bags (3) is performed.

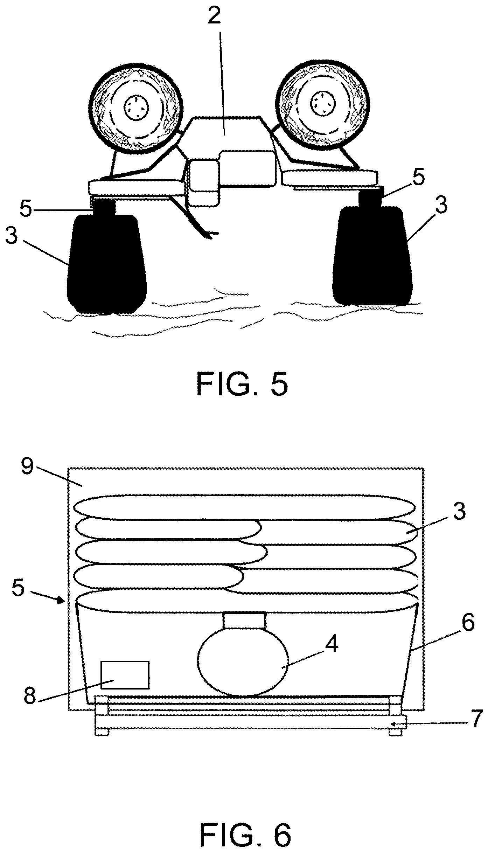

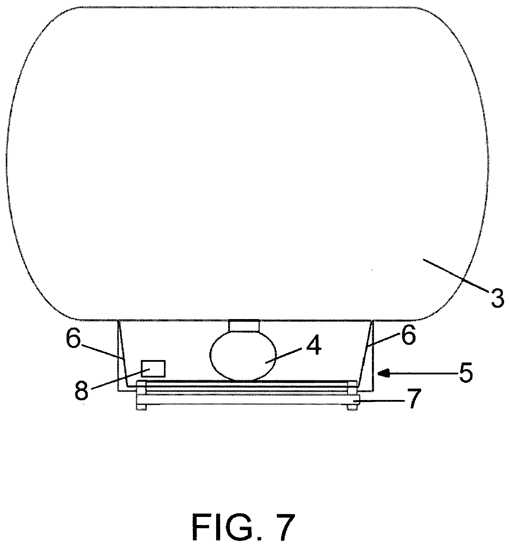

The inflatable and deployable bag (3) that is part of the device (5) is arranged in a watertight housing (9) and fastened by means of straps (6) or similar elements, as shown in figures 6 and 7, in which the corresponding fastening element (7) to the chassis of the vehicle (2) itself can also be observed, by means of screws or any other conventional means.

The watertight housing (9) is provided with locking means that allow its opening for the activation of the device and inflation of the deployable bag (3).

The electronic control unit (8) with sensors and logic, is intended to control the variables that must concur as an activation algorithm to safely trigger the deployment of the inflatable bag or bags (3), which may have an inflated volume greater than that of the driver (1) of the vehicle (2).

The device (5) may contain one or more inflatable bags (3), regulated by the same electronic control unit (8) located inside the watertight housing (9) or elsewhere in the vehicle (2), whereby one or more devices (5) may be arranged in the vehicle (2).

On the other hand, the gas generators (4) consist of a blister containing pressurized gas, or chemical compounds to generate such gas, which can be activated by an impulse from the electronic control unit (8).

The inflatable bags (3) are deployed in three dimensions orthogonal to each other, height, width and depth, remaining inflated for the necessary time so that, in case the vehicle (2) overturns and falls on the driver (1), they avoid direct impact and provide a safety space between the vehicle (2) and the ground, thanks to the volume of these bags once inflated and their resistance to crushing.

Finally, it should be added that the device can be complemented with system failure warning elements and audible and/or luminous warnings, which can be activated immediately before reaching the rollover position, as an alarm, based on the detection of a degree of inclination detected by the control logic of the device, thus allowing the driver to be warned of the possibility of a potential rollover.

## Claims

1. Automatic inflatable crush protection device for all-terrain vehicles, quad bikes and quads, in order to protect the ATV rider against crushing by the vehicle's own weight in case of rollover, consisting of one or more inflatable and deployable bags (3) driven by gas generators (4), all complemented by at least one electronic control unit (8) equipped with inertial sensors and the necessary logic to calculate the vehicle inclination angles and automatic activation of the gas generator or generators (4) once a pre-established inclination value has been exceeded, defining a safety space between the vehicle (2) and the ground in case of rollover, **characterized in that** the inflatable bags (3) are simultaneously deployable in three dimensions orthogonal to each other, height, width and depth, each bag (3) being conveniently fixed to the chassis of the vehicle (2), by means of straps (6) anchoring to the element (7) fastening to the chassis of the vehicle (2) as a means of anti-displacement of the bags (3).

2. Automatic inflatable crush protection device for all-terrain vehicles, quad bikes and quads, according to claim 1, **characterized in that** the elements participating in the device (5) are arranged in a watertight housing (9) with closing means that allow its opening for the activation of the device and inflation of the deployable bag (3).

3. Automatic inflatable crush protection device for all-terrain vehicles, quad bikes and quads, according to claim 1, **characterized in that** it includes means of audible and/or luminous warning of system failure, as well as warning the driver of the possibility of a potential rollover from the detection of a degree of inclination detected by the control logic of the device.

4. Automatic inflatable crush protection device for all-terrain vehicles, quad bikes and quads, according to claim 1, **characterized in that** the gas generators (4) consist of a blister containing pressurized gas, or chemical compounds to generate said gas, activated by an impulse from the electronic control unit (8).
